Europäisches Patentamt

European Patent Office

Office européen des brevets

(19)

(11) Veröffentlichungsnummer: **0 065 170**
**B1**

(12) **EUROPÄISCHE PATENTSCHRIFT**

(45) Veröffentlichungstag der Patentschrift:
**04.09.85**

(21) Anmeldenummer: **82103760.3**

(22) Anmeldetag: **03.05.82**

(51) Int. Cl.⁴: **H 01 M 2/20, H 01 M 10/39**

(54) Hochtemperaturbatterie.

(30) Priorität: **12.05.81 DE 3118692**

(43) Veröffentlichungstag der Anmeldung:
**24.11.82 Patentblatt 82/47**

(45) Bekanntmachung des Hinweises auf die Patenterteilung:
**04.09.85 Patentblatt 85/36**

(84) Benannte Vertragsstaaten:
**BE FR GB IT NL**

(56) Entgegenhaltungen:
**DE - A - 2 819 026**
**FR - A - 1 262 516**
**FR - A - 2 184 599**
**GB - A - 1 536 143**
**US - A - 3 956 021**
**US - A - 3 989 544**

(73) Patentinhaber: **BROWN, BOVERI & CIE Aktiengesellschaft, Kallstadter Strasse 1, D-6800 Mannheim 31 (DE)**

(72) Erfinder: **Hasenauer, Dieter, Ing. grad., Freudenbergstrasse 13, D-6940 Weinheim (DE)**

(74) Vertreter: **Kempe, Wolfgang, Dr. et al, c/o Brown, Boveri & Cie AG Postfach 351, D-6800 Mannheim 1 (DE)**

## Beschreibung

Die Erfindung bezieht sich auf eine Hochtemperaturbatterie mit mindestens einer elektrochemischen Speicherzelle auf der Basis von Alkalimetall und Chalkogen und einer die Speicherzelle umgebenden thermischen Isolierung die mit Durchführungen für die elektrischen Leiter versehen ist.

Solche Hochtemperaturbatterien, die aus elektrochemischen Speicherzellen aufgebaut sind, werden in Zukunft in vermehrtem Masse für den Elektroantrieb von Fahrzeugen eingesetzt.

Eine Hochtemperaturbatterie ist zum Beispiel aus einer Vielzahl von elektrochemischen Speicherzellen aufgebaut, die in einer bestimmten Art und Weise miteinander verschaltet sind. Die Hochtemperaturbatterie arbeitet bei einer Temperatur zwischen 350 °C und 500 °C. Um Wärmeverluste zu vermeiden, sind die Speicherzellen der Hochtemperaturbatterie von einer thermischen Isolierung umgeben. Damit die Hochtemperaturbatterie auch nach einer Betriebspause von mehreren Stunden oder Tagen wieder arbeiten kann, muss sie auch während dieser Zeit auf einer Temperatur von 300 °C gehalten werden.

Dies ist bei den bisher bekannten Hochtemperaturbatterien sehr schwierig, da während der Betriebspause durch die elektrischen Anschlüsse sehr viel Wärme nach aussen abgeleitet wird. Die elektrischen Anschlüsse werden durch die Isolierung der Hochtemperaturbatterie hindurchgeführt. Sie stellen die Verbindung zwischen den Speicherzellen und dem mit Energie zu versorgenden Aggregat her.

Der Erfindung liegt daher die Aufgabe zugrunde, eine Hochtemperaturbatterie zu schaffen, die insbesondere in ihren Ruhepausen ein Minimum an Wärmeverlusten aufweist.

Gelöst wird diese Aufgabe bei einer Hochtemperaturbatterie der eingangs genannten Art dadurch, dass jeder in die Hochtemperaturbatterie geführte elektrische Leiter aus wenigstens zwei Teilleitern besteht, die über mindestens ein Kontaktelement elektrisch leitend und lösbar miteinander verbunden sind, und dass das die Kontaktstelle bildende Kontaktelement im Inneren der Hochtemperaturbatterie angeordnet ist.

In vorteilhafter Weise sind beide den elektrischen Leiter bildenden Teilleiter aus einer Kupferlegierung gefertigt, die auch bei hohen Temperaturen einen hohen elektrischen Leitwert besitzt. Beide Teilleiter sind stabförmig ausgebildet. Der erste Teilleiter ist hierbei ausschliesslich innerhalb der Batterie angeordnet und elektrisch leitend an die Speicherzelle angeschlossen. An seiner Kontaktstelle weist der erste Teilleiter eine zylindrische Bohrung auf, die konzentrisch zu seiner Längsachse verläuft. In die Bohrung des ersten Teilleiters ist ein Kontaktelement eingesetzt. Während des Betriebs der Hochtemperaturbatterie ist der zweite Teilleiter durch einen Kanal in der thermischen Isolierung der Hochtemperaturbatterie hindurchgesteckt und in das in der Bohrung des ersten Teilleiters sitzende Kontaktelement eingerastet. Der Durchmesser des zweiten Teilleiters ist hierfür auf den Durchmesser der Bohrung, insbesondere auf den Durchmesser des Kontaktelementes abgestimmt. In vorteilhafter Weise kann der zweite Teilleiter jederzeit aus dem Kontaktelement gelöst und mindestens bis zur äusseren Begrenzungsfläche der thermischen Isolierung aus der Hochtemperaturbatterie herausgenommen werden.

Um während des Betriebes der Hochtemperaturbatterie einen möglichst geringen Wärmeverlust zu erzielen, ist der Durchmesser des Kanals so gross gewählt, dass der zweite Teilleiter gerade noch hindurchgeschoben werden kann.

Wie bereits oben erwähnt, kann der zweite Teilleiter bei Bedarf aus der Hochtemperaturbatterie herausgenommen werden. Ein Lösen der beiden Teilleiter erfolgt vorzugsweise in den Ruhepausen der Hochtemperaturbatterie. Dadurch wird erreicht, dass der für die Durchführung des zweiten Teilleiters vorgesehene Kanal der thermischen Isolierung während dieser Zeit nur mit Luft ausgefüllt ist. Damit wird sichergestellt, dass das gut wärmeleitende Kupfermaterial des zweiten Teilleiters nicht mehr mit dem heissen Innenraum der Hochtemperaturbatterie in Verbindung steht. Die in dem Kanal der thermischen Isolierung stehende Luft wirkt als gute thermische Isolierung. Die Wärmeleitfähigkeit der Luft beträgt $0{,}026\,\text{W}/(\text{mK})$. Sie ist damit um ein Vielfaches kleiner als die Wärmeleitfähigkeit des zweiten Teilleiters. Dieser ist wie bereits oben erwähnt aus einer Kupferlegierung gefertigt und besitzt damit eine Wärmeleitfähigkeit von $\lambda = 384\,\text{W}/(\text{mk})$.

Die Erfindung wird nachfolgend anhand von Zeichnungen erläutert. Es zeigen:

Fig. 1 eine Hochtemperaturbatterie im Vertikalschnitt,

Fig. 2 die in Fig. 1 gezeigte Hochtemperaturbatterie im Ruhezustand, ebenfalls im Vertikalschnitt.

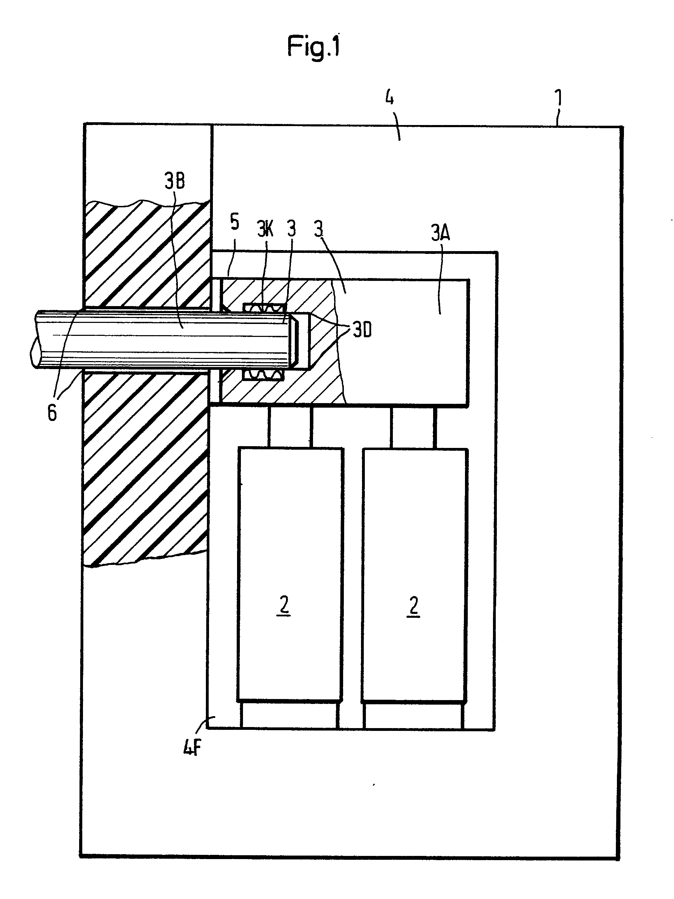

Die in Fig. 1 gezeigte Hochtemperaturbatterie 1 umfasst im wesentlichen zwei elektrochemische Speicherzellen 2, einen elektrischen Leiter 3 sowie eine thermische Isolierung 4.

Die Anzahl der Speicherzellen einer Hochtemperaturbatterie ist frei wählbar, sie richtet sich vorzugsweise nach der gewünschten Grösse der Hochtemperaturbatterie. Die hier schematisch dargestellten Speicherzellen 2 weisen beide jeweils einen Anoden- und einen Kathodenraum auf, die durch einen alkaliionenleitenden Festelektrolyten (hier nicht dargestellt) getrennt sind. Der Anodenraum der Speicherzellen 2 enthält vorzugsweise flüssiges Natrium, während der Kathodenraum mit Schwefel ausgefüllt ist. Begrenzt wird jede Speicherzelle von einem metallischen Gehäuse, das vorzugsweise auch als Stromabnehmer dient. Ein zweiter Stromabnehmer ragt in den Festelektrolyten hinein und steht einige mm über die Speicherzelle 2 über. Die Speicherzellen 2 sind innerhalb der thermischen Isolierung 4 angeordnet, die in Form eines geschlossenen doppelwandigen Gehäuses ausgebildet ist, und im Inneren einen Freiraum 4F für die Aufnahme der Speicherzellen 2 aufweist.

Bei der thermischen Isolierung handelt es sich vorzugsweise um eine Vakuumisolierung. Sie weist einen evakuierten Hohlraum auf, innerhalb dessen ein Isoliermaterial angeordnet ist. Der Hohlraum liegt zwischen der beiden Begrenzungswänden der thermischen Isolierung, die in einem definierten Abstand voneinander angeordnet sind.

Die innerhalb der thermischen Isolierung 4 angeordneten Speicherzellen sind elektrisch leitend mit einem oder mehreren Aggregaten (hier nicht dargestellt) verbunden, die mit elektrischer Energie zu versorgen sind. Die Aggregate sind ausserhalb der Hochtemperaturbatterie angeordnet. Diese elektrische Verbindung erfolgt über den elektrischen Leiter 3, der bei der hier gezeigten Ausführungsform in zwei Teilleiter 3A und 3B aufgeteilt ist. Beide Teilleiter sind stabförmig ausgebildet und vorzugsweise aus einer Kupferlegierung hergestellt. Sie weisen eine Wärmeleitfähigkeit $\lambda$ = von 384 W/(mK) auf. Über eine Kontaktstelle 5, die innerhalb der Hochtemperaturbatterie 1 liegt, können die beiden Teilleiter 3A und 3B elektrisch leitend und lösbar miteinander verbunden werden. Der erste Teilleiter 3A ist ausschliesslich innerhalb der Hochtemperaturbatterie 1 angeordnet und steht elektrisch leitend mit den Speicherzellen 2 in Verbindung. Im Bereich der Kontaktstelle 5, die vorzugsweise direkt hinter der inneren Begrenzungsfläche der thermischen Isolierung 4 liegt, ist der erste Teilleiter 3A mit einer zylindrischen Bohrung versehen. Diese verläuft konzentrisch zu seiner Längsachse. In diese Bohrung 3D ist ein Kontaktelement 3K eingesetzt. Dieses ist vorzugsweise als Multikontaktelement ausgebildet.

Der zweite Teilleiter 3B stellt die Verbindung zwischem dem Aussenbereich der Hochtemperaturbatterie 1 und dem Innenbereich derselben her. Die thermische Isolierung 4 ist mit einem Kanal 6 versehen, über den der Innenraum 4F mit der äusseren Umgebung der Hochtemperaturbatterie 1 in Verbindung steht. Durch den Kanal 6 kann der Teilleiter 3B in den Innenraum 4F geführt werden. Um grosse Wärmeverluste zu vermeiden ist der Durchmesser dieses Kanales 6 vorzugsweise nur geringfügig grösser gewählt als der Durchmesser des Teilleiters 3B. Vor der im Inneren der Hochtemperaturbatterie 1 liegenden Öffnung des Kanales 6 ist der erste Teilleiter 3A mit seiner Bohrung 3D angeordnet. Der Durchmesser des zweiten Teilleiters 3B ist so gewählt, dass er in die Bohrung 3D beziehungsweise in das Kontaktelement 3K eingeschoben werden kann, das in die Bohrung 3D eingesetzt ist. Über das Kontaktelement 3K wird die leitende Verbindung zwischen dem ersten Teilleiter 3A und dem zweiten Teilleiter 3B hergestellt.

Damit die chemischen Reaktionen innerhalb der Speicherzellen 2 ablaufen können, ist eine Temperatur von etwa 350 °C erforderlich. Um diese Temperatur ständig halten zu können, sind die Speicherzellen 2 in der thermischen Isolierung 4 angeordnet. Durch diese Massnahme werden die für einen kontinuierlichen Batteriebetrieb erforderlichen Bedingungen erfüllt, auch wenn über den elektrischen Leiter 3 laufend Wärme nach aussen abgeleitet wird.

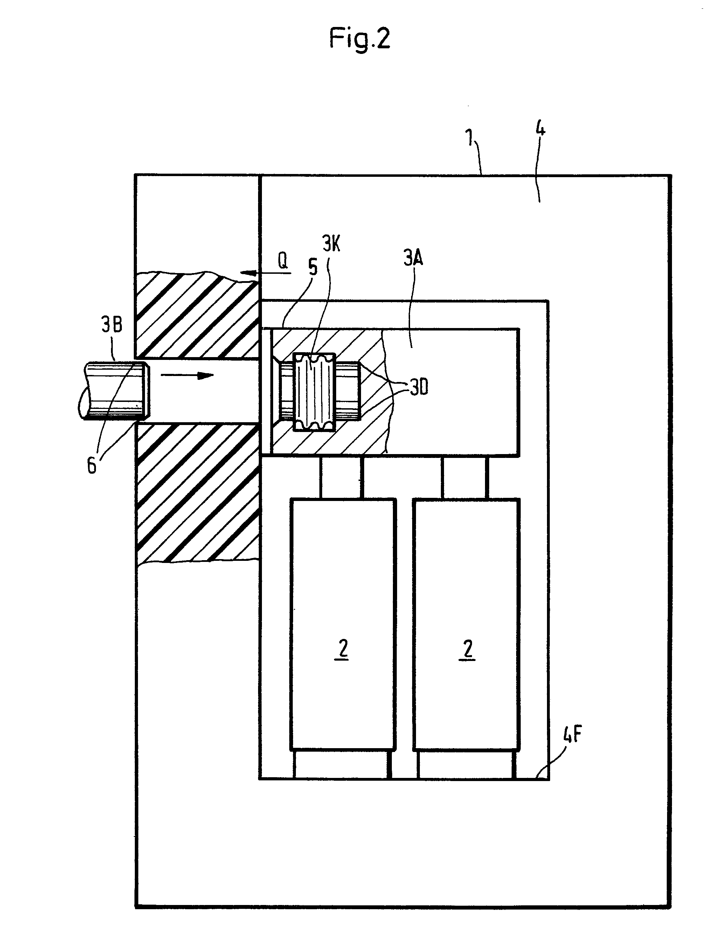

Wird die Hochtemperaturbatterie 1 für Stunden oder Tage ausser Betrieb gesetzt, so dürfen sich die Speicherzellen 2 während dieser Zeit nicht abkühlen, sondern müssen auf einem Temperaturniveau von 300 °C gehalten werden, damit die Hochtemperaturbatterie nach Beendigung der Ruhepause wieder funktionsfähig ist. Wie bereits oben erwähnt, erfolgt über den elektirschen Leiter 3 ein sehr grosser Wärmetransport aus dem Inneren der Hochtemperaturbatterie 1 nach aussen. Um diesen Wärmetransport während der Betriebspause zu unterbinden, werden vor Beginn der Betriebspausen die beiden Teilleiter 3A und 3B voneinander getrennt. Hierfür wird der zweite Teilleiter 3B aus dem Kontaktelement 3K gelöst, und bis zur äusseren Begrenzung der thermischen Isolierung 4 aus der Hochtemperaturbatterie 1 herausgezogen. Dies ist auf einfache Weise möglich, da die beiden Teilleiter 3A und 3B lösbar miteinander verbunden sind. In Fig. 2 ist dies dargestellt. Fig. 2 zeigt ebenfalls die in Fig. 1 dargestellte Hochtemperaturbatterie, jedoch im Ruhezustand. Anhand der Zeichnung ist zu sehen, dass der Kanal 6 jetzt nur noch mit Luft ausgefüllt ist. Luft hat bekanntlich nur eine sehr kleine Wärmeleitfähigkeit, deren Wert $\lambda$ = 0,026 W/(mK) beträgt. Durch die Anordnung des zweiten Teilleiterendes 3B vor der äusseren Öffnung des Kanales 6 wird sichergestellt, dass keine Luftzirkulation durch den Kanal 6 erfolgt. Damit wird erreicht, dass die innerhalb der Hochtemperaturbatterie, insbesondere innerhalb des Freiraumes 4F der thermischen Isolierung befindliche Wärme nur allmählich verlorengeht. Bei dieser Ausführungsform der Batterie kann die erforderliche Ruhetemperatur von 300 °C über mehrere Tage gehalten werden.

**Patentansprüche**

1. Hochtemperaturbatterie (1) mit mindestens einer elektrochemischen Speicherzelle (2) auf der Basis von Alkalimetall und Chalkogen und einer die Speicherzelle (2) umgebenden thermischen Isolierung (4), die mit Durchführungen für die elektrischen Leiter (3) versehen ist, dadurch gekennzeichnet, dass jeder in die Hochtemperaturbatterie (1) geführte elektrische Leiter (3) aus wenigstens zwei Teilleitern (3A, 3B) besteht, die über mindestens ein Kontaktelement (3K) elektrisch leitend und lösbar miteinander verbunden sind, und dass das die Kontaktstelle (5) bildende Kontaktelement (3K) im Inneren der Hochtemperaturbatterie (1) angeordnet ist.

2. Hochtemperaturbatterie nach Anspruch 1, dadurch gekennzeichnet, dass der erste Teilleiter (3A) aus einer Kupferlegierung gefertigt ist.

3. Hochtemperaturbatterie nach einem der Ansprüche 1 oder 2, dadurch gekennzeichnet, dass der zweite Teilleiter (3B) aus einer Kupferlegierung gefertigt ist.

4. Hochtemperaturbatterie nach einem der Ansprüche 1 bis 3, dadurch gekennzeichnet, dass die beiden Teilleiter (3A, 3B) stabförmig ausgebildet sind.

5. Hochtemperaturbatterie nach Anspruch 1 bis 4, dadurch gekennzeichnet, dass der erste Teilleiter (3A) nur in der Hochtemperaturbatterie (1) angeordnet und mit den Speicherzellen (2) elektrisch leitend verbunden ist.

6. Hochtemperaturbatterie nach einem der Ansprüche 1 bis 5, dadurch gekennzeichnet, dass der erste Teilleiter (3A) an der Kontaktstelle (5) eine zylindrische Bohrung (3D) aufweist, die konzentrisch zu seiner Längsachse verläuft.

7. Hochtemperaturbatterie nach einem der Ansprüche 1 bis 6, dadurch gekennzeichnet, dass in die Bohrung (3D) ein Kontaktelement (3K) eingesetzt ist.

8. Hochtemperaturbatterie nach einem der Ansprüche 1 bis 7, dadurch gekennzeichnet, dass das Kontaktelement (3K) als Multikontaktelement ausgebildet ist.

9. Hochtemperaturbatterie nach einem der Ansprüche 1 bis 8, dadurch gekennzeichnet, dass der zweite Teilleiter (3B) durch einen Kanal (6) in der thermischen Isolierung (4) der Hochtemperaturbatterie (1) hindurchgesteckt und in das in der Bohrung (3D) des ersten Teilleiters (3A) sitzende Kontaktelement (3K) eingerastet ist.

10. Hochtemperaturbatterie nach einem der Ansprüche 1 bis 9, dadurch gekennzeichnet, dass der zweite Teilleiter (3B) mindestens bis zur äusseren Begrenzungsfläche der thermischen Isolierung (4) aus der Hochtemperaturbatterie (1) herausnehmbar ist.

11. Hochtemperaturbatterie nach einem der Ansprüche 1 bis 10, dadurch gekennzeichnet, dass der Durchmesser des für die Durchführung des zweiten Teilleiters (3B) vorgesehene Kanal (6) geringfügig grösser ist als der Durchmesser des zweiten Teilleiters (3B).

12. Hochtemperaturbatterie nach einem der Ansprüche 1 bis 11, dadurch gekennzeichnet, dass im Ruhebetrieb der Hochtemperaturbatterie (1) der Kanal (6) der thermischen Isolierung (4) nur mit Luft ausgefüllt ist.

13. Hochtemperaturbatterie nach einem der Ansprüche 1 bis 12, dadurch gekennzeichnet, dass das zweite Teilleiterende (3B) während der Ruhepausen der Hochtemperaturbatterie (1) vor der äusseren Öffnung des Kanals (6) angeordnet ist.

## Revendications

1. Batterie à haute température (1) comprenant au moins une cellule électrochimique d'accumulation (2) à base de métal alcalin et de chalcogène, ainsi qu'une isolation thermique (4) qui entoure la cellule d'accumulation (2) et est percée de passages traversants pour les conducteurs électriques (3), caractérisée par le fait que chaque conducteur électrique (3) parcourant la batterie à haute température (1) se compose d'au moins deux sous-conducteurs (3A, 3B) qui sont solidarisés amoviblement et avec liaison électriquement conductrice par l'intermédiaire d'au moins une pièce de contact (3K); et par le fait que la pièce de contact (3K) formant la zone de contact (5) se trouve à l'intérieur de la batterie à haute température (1).

2. Batterie à haute température selon la revendication 1, caractérisée par le fait que le premier sous-conducteur (3A) est fabriqué en un alliage de cuivre.

3. Batterie à haute température selon l'une des revendications 1 ou 2, caractérisée par le fait que le second sous-conducteur (3B) est fabriqué en un alliage de cuivre.

4. Batterie à haute température selon l'une des revendications 1 à 3, caractérisée par le fait que les deux sous-conducteurs (3A, 3B) sont réalisés en forme de barres.

5. Batterie à haute température selon les revendications 1 à 4, caractérisée par le fait que le premier sous-conducteur (3A) est disposé uniquement dans la batterie à haute température (1) et est raccordé aux cellules d'accumulation (2) avec liaison électriquement conductrice.

6. Batterie à haute température selon l'une des revendications 1 à 5, caractérisée par le fait que le premier sous-conducteur (3A) présente, dans la zone de contact (5), un perçage cylindrique (3D) s'étendant concentriquement à son axe longitudinal.

7. Batterie à haute température selon l'une des revendications 1 à 6, caractérisée par le fait qu'une pièce de contact (3K) est incorporée dans le perçage (3D).

8. Batterie à haute température selon l'une des revendications 1 à 7, caractérisée par le fait que la pièce de contact (3K) est réalisée sous la forme d'une pièce multicontact.

9. Batterie à haute température selon l'une des revendications 1 à 8, caractérisée par le fait que le second sous-conducteur (3B) est emboîté dans un canal (6) pratiqué dans l'isolation thermique (4) de la batterie à haute température (1), et est encliqueté dans la pièce de contact (3K) logée dans le perçage (3D) du premier sous-conducteur (3A).

10. Batterie à haute température selon l'une des revendications 1 à 9, caractérisée par le fait que le second sous-conducteur (3B) peut être extrait de la batterie à haute température (1) au moins jusqu'à la surface externe de délimitation de l'isolation thermique (4).

11. Batterie à haute température selon l'une des revendications 1 à 10, caractérisée par le fait que le diamètre du canal (6) prévu pour le passage traversant du second sous-conducteur (3B) est légèrement plus grand que le diamètre du second sous-conducteur (3B).

12. Batterie à haute température selon l'une des revendications 1 à 11, caractérisée par le fait que, lorsque cette batterie à haute température (1) est au repos, le canal (6) de l'isolation thermique (4) est seulement comblé par de l'air.

13. Batterie à haute température selon l'une des revendications 1 à 12, caractérisée par le fait que, lors des périodes de repos de cette batterie à haute température (1), l'extrémité du second sous-conducteur (3B) est disposée avant l'ouverture externe du canal (6).

## Claims

1. High-temperature battery (1) with at least one electrochemical storage cell (2) based on alkali metal and chalcogen, and a thermal insulation (4) which surrounds the storage cell (2) and is provided with passages for the electric conductors (3), characterised in that each electric conductor (3) passed into the high-temperature battery (1) consists of at least two part conductors (3A, 3B) which are electrically conductively and releasably connected to one another via at least one contact element (3K), and that the contact element (3K) forming the contact point (5) is located in the interior of the high-temperature battery (1).

2. High-temperature battery according to Claim 1, characterised in that the first part conductor (3A) is made of a copper alloy.

3. High-temperature battery according to Claim 1 or 2, characterised in that the second part conductor (3B) is made of a copper alloy.

4. High-temperature battery according to one of Claims 1 to 3, characterised in that the two part conductors (3A, 3B) are of rod-like shape.

5. High-temperature battery according to Claims 1 to 4, characterised in that the first part conductor (3A) is located exclusively inside the high-temperature battery (1) and is electrically conductively connected to the storage cells (2).

6. High-temperature battery according to one of Claims 1 to 5, characterised in that the first part conductor (3A) has, at the contact point (5), a cylindrical bore (3D) which runs concentrically to its longitudinal axis.

7. High-temperature battery according to one of Claims 1 to 6, characterised in that a contact element (3K) is inserted into the bore (3D).

8. High-temperature battery according to one of Claims 1 to 7, characterised in that the contact element (3K) is designed as a multi-contact element.

9. High-temperature battery according to one of Claims 1 to 8, characterised in that the second part conductor (3B) is plugged through a channel (6) in the thermal insulation (4) of the high-temperature battery (1) and engages in the contact element (3K) seated in the bore (3D) of the first part conductor (3A).

10. High-temperature battery according to one of Claims 1 to 9, characterised in that the second part conductor (3B) is removable from the high-temperature battery (1) at least up to the outer boundary surface of the thermal insulation (4).

11. High-temperature battery according to one of Claims 1 to 10, characterised in that the diameter of the channel (6) provided for the passage of the second part conductor (3B) is slightly larger than the diameter of the second part conductor (3B).

12. High-temperature battery according to one of Claims 1 to 11, characterised in that, during rest operation of the high-temperature battery (1), the channel (6) of the thermal insulation (4) is filled exclusively with air.

13. High-temperature battery according to one of Claims 1 to 12, characterised in that the end of the second part conductor (3B) is located in front of the outer orifice of the channel (6) during the rest periods of the high-temperature battery (1).

Fig.1

Fig.2